# FASCICULE DE BREVET EUROPEEN

(11) **EP 4 188 682 B1**
(45) Date de publication et mention de la délivrance du brevet: **24.09.2025**
(21) Numéro de dépôt: 21752067.5
(22) Date de dépôt: 30.07.2021
(51) Int. Cl.: B29C 65/02, B29C 65/04, B29C 65/08, B29C 65/14, B29C 65/18

(54) **APPAREIL POUR SOUDER UNE POCHE**
VORRICHTUNG ZUM VERSCHWEISSEN EINES BEUTELS
DEVICE FOR WELDING A POUCH

(30) Priorité: 03.08.2020 FR 2008254
(43) Date de publication de la demande: 07.06.2023
(73) Titulaire: Maco Pharma, 59420 Mouvaux (FR)
(72) Inventeur: DEVERRE, Frédéric, 34090 Montpellier (FR); CHAVATTE, Arnaud, 62350 Saint Floris (FR); COASNE, Nicolas, 59320 Radinghem en Weppes (FR); BONTINCK, Pierre-eloi, 59510 Forest-sur-Marque (FR)
(74) Mandataire: Sayettat, Julien Christian
(86) Numéro de dépôt international: PCT/EP2021/071458
(87) Numéro de publication internationale: WO 2022/029040

(56) Documents cités:
- JP-U- H0 568 810
- US-A1- 2012 204 521
- US-A1- 2016 304 227

## Description

L'invention concerne un appareil pour souder un récipient souple ainsi qu'un procédé mettant en œuvre un tel appareil.

Elle s'applique au domaine médical et biomédical, en particulier au domaine de la transfusion sanguine et encore plus particulièrement au domaine du traitement du sang.

Dans le cadre de la transfusion, le sang est d'abord collecté d'un donneur puis séparé par centrifugation en différents composants sanguins tels que les concentrés de globules rouges, le plasma et les concentrés de plaquettes. Afin d'améliorer la qualité et la sécurité de ces différents composants sanguins, ceux-ci peuvent subir différents traitements tels que l'élimination des leucocytes et/ou la réduction des pathogènes.

Il est connu du document WO 2007/076834 A1, un procédé pour inactiver les bactéries, les virus et/ou les leucocytes d'un concentré plaquettaire par irradiation sous agitation dudit concentré plaquettaire avec une lumière ultraviolette.

Le document WO 2008/034476 A1 propose quant à lui un système à poches adapté à la mise en œuvre dudit procédé d'inactivation. Dans ce document, la poche d'irradiation destinée à contenir le liquide à traiter comprend notamment un tube d'entrée et un tube de sortie. Lors du procédé d'inactivation, le liquide à traiter est recueilli dans la poche d'illumination via le tube d'entrée puis la poche est soudée de sorte à isoler l'ouverture du tube d'entrée du reste de la poche contenant le liquide. Ainsi, on s'assure que la poche d'irradiation ne contient aucun volume mort qui échapperait à l'irradiation.

Cette opération de soudure est critique car une mauvaise soudure pourrait engendrée une fuite de liquide en dehors de la poche ou une mauvaise irradiation du liquide avec un risque de ne pas inactiver suffisamment les pathogènes.

Cette opération de soudure est réalisée avec une soudeuse à main de type de celle décrite dans le document WO 2016/079702 A1 et nécessite une certaine habitude pour souder correctement la poche.

En outre, avant de réaliser cette soudure de poche, il convient également de chasser l'air de la poche d'irradiation. Cette opération est réalisée par un opérateur en exerçant une pression sur la poche de sorte à faire remonter le liquide jusqu'à un orifice d'accès de la poche, poussant en même temps l'air vers l'extérieur de la poche. Cette opération est également génératrice de temps de main d'œuvre et requiert un certain tour de main de l'opérateur.

Dans le document WO 2013/106605 A1, il est proposé une poche d'irradiation munie de pinces coulissantes permettant d'ouvrir ou fermer les orifices d'accès de la poche. Ces pinces évitent la présence de volume mort dans la poche d'irradiation. L'opération reste cependant manuelle et il existe un risque de ne pas faire suffisamment coulisser les pinces pour fermer les orifices d'accès.

L'invention vise ainsi à simplifier la soudure de la poche d'irradiation tout en s'assurant de la bonne réalisation de cette soudure. Elle permet également de faciliter la purge d'air.

On connaît dans le domaine de la transfusion des appareils pour souder des tubulures. Par exemple, le document US 2005/0000640 A1 propose un appareil pour souder comprenant une surface destinée à placer une portion de tubulure contenant du sang, et un moyen de soudure pour former plusieurs segments de tubulure comprenant des échantillons de sang.

Dans un autre exemple, le document EP 3 290 065 A1 décrit un appareil pour séparer les composants sanguins par pression sur les poches, ledit appareil comprenant des dispositifs pour pincer et souder les tubulures qui relient les poches entre elles.

Dans le domaine médical, il existe également des appareils pour souder. Par exemple, le document US2012/0204521 propose un appareil pour souder un emballage médical, ledit appareil comprenant des mâchoires de soudure et une buse pour retirer ou injecter de l'air de l'emballage médical. L'appareil est notamment contrôlé pour, après le retrait de l'air, fermer les mâchoires pour fermer l'emballage médical, chauffer les mâchoires pour réaliser la soudure, puis ouvrir les mâchoires.

Le document US2016/0304227 propose un appareil pour souder par laser une poche de cryoconservation de tissus biologique. Cet appareil comprend des blocs de pincement actionnés par un actionneur, ainsi qu'un laser pour réaliser la soudure. De façon automatique, la poche à souder est pincée entre les blocs et soudée par laser.

Dans le domaine alimentaire, le document JP H05 68810 décrit également un appareil pour souder une poche à usage alimentaire comprenant un dispositif de soudure mobile vers un socle, ainsi qu'un moyen pour injecter du gaz dans ladite poche. Aucun dispositif d'actionnement n'est prévu pour relâcher le pincement de la poche avant sa soudure.

Ces différents appareils ne sont pas adaptés pour pincer et souder une portion déterminée d'un récipient souple comme une poche, et notamment ne permettent pas de pincer à plusieurs reprises le récipient sans le souder, avant de le souder définitivement.

Selon un premier aspect, l'invention propose un appareil pour souder une portion d'un récipient souple, ledit appareil comprenant :
- un plateau pour recevoir ledit récipient à souder,
- un dispositif de soudure agencé sur ledit plateau et conçu pour passer de l'un à l'autre des états suivants : un état d'ouverture selon lequel la portion à souder du récipient est placée dans ledit dispositif de soudure, un état de pincement selon lequel la portion à souder du récipient est pincée, et un état de soudure qui suit l'état de pincement selon lequel la portion à souder du récipient est soudée, et
- un dispositif d'actionnement conçu pour actionner le dispositif de soudure au moins de l'état de pincement à l'état d'ouverture sans passer par l'état de soudure et de l'état de pincement à l'état de soudure.

Selon un deuxième aspect, l'invention concerne un procédé pour souder une portion d'un récipient souple comprenant un premier orifice d'accès en communication fluidique avec un volume intérieur dudit récipient à l'aide de l'appareil selon le premier aspect, ledit procédé comprenant les étapes consistant à :
a) placer le récipient sur le plateau, de sorte à disposer la portion du récipient à souder au niveau du dispositif de soudure de l'appareil, ledit dispositif de soudure étant dans sa position d'ouverture,
b) exercer un pression sur ledit récipient ainsi placé sur le plateau de sorte à évacuer l'air contenu dans le récipient par ledit premier orifice d'accès du récipient,
c) activer le dispositif d'actionnement pour faire passer le dispositif de soudure de l'état d'ouverture à l'état de pincement, de sorte à isoler le premier orifice d'accès et le volume intérieur dudit récipient dont l'air a été chassé, et
d) activer le dispositif d'actionnement pour faire passer le dispositif de soudure de l'état de pincement à l'état de soudure, de sorte à former un joint d'étanchéité entre ledit premier orifice d'accès et le volume intérieur du récipient.

D'autres objets et avantages apparaîtront au cours de la description qui suit.
[Fig.1] représente une vue schématique d'un système à poches pour l'inactivation des pathogènes d'un composant sanguin comprenant un récipient souple à souder.
[Fig.2] représente une vue schématique du bord supérieur du récipient souple du système à poches de la [Fig.1], après soudure de la portion à souder.
[Fig.3], [Fig.4], [Fig.5] et [Fig.6] représentent chacune une vue schématique en perspective d'un appareil pour souder selon différentes réalisations de l'invention.
[Fig.7] représente une vue schématique d'un dispositif de soudure de l'appareil pour souder de la [Fig.6].
[Fig.8] et [Fig.9] représentent chacune une vue schématique en perspective et de côté, respectivement, d'un appareil pour souder selon une réalisation particulière de l'invention.

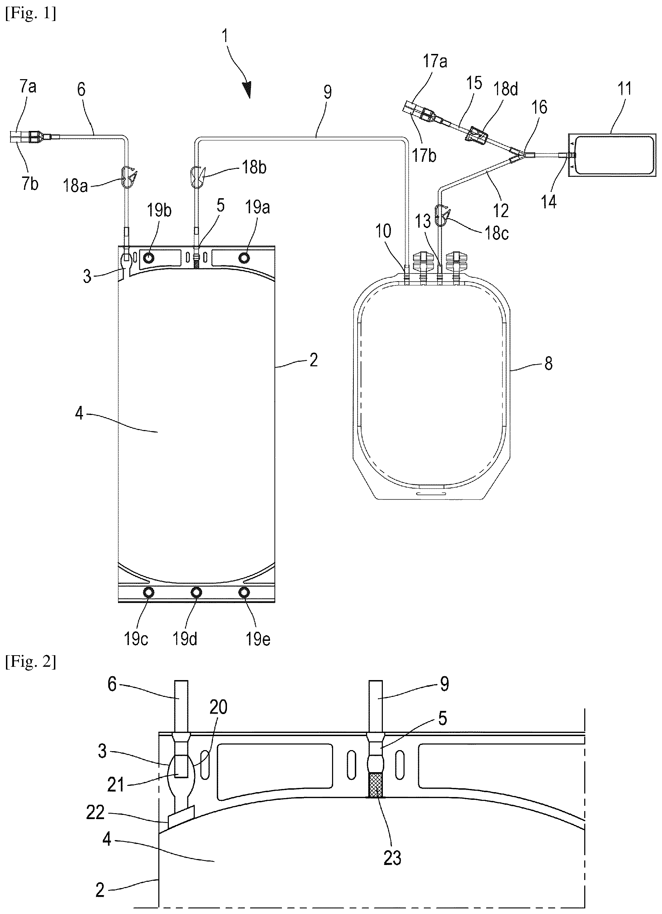

La [Fig.1] représente de façon schématique un système à poches pour la réduction des pathogènes d'un composant sanguin à l'aide notamment du procédé décrit dans le document WO 2007/076834 A1.

Le système à poches 1 comprend un récipient souple 2 destinée à recevoir le liquide à traiter, notamment par irradiation ultraviolette. Le récipient 2 comprend un premier orifice d'accès 3 en communication fluidique avec le volume intérieur 4 du récipient 2. Le récipient 2 comprend en outre un deuxième orifice d'accès 5 en communication fluidique avec le volume intérieur 4 du récipient souple 2. Le récipient 2 est en en communication fluidique avec une première tubulure 6 par l'intermédiaire du premier orifice d'accès 3. La première tubulure 6 est pourvue à son extrémité par deux évents 7a,7b comprenant chacun une membrane filtrante laissant passer l'air et formant une barrière stérile. Ces évents permettent la stérilisation par gaz du système à poches 1. Le récipient 2 comprend en outre des ouvertures 19a,19b,19c,19d,19e pratiquées dans un ou des bords périphériques du récipient 2 permettant de suspendre et/ou maintenir ledit récipient 2.

Le système à poches 1 comprend en outre une poche de stockage 8 destinée à recueillir et stocker le composant sanguin traité. Cette poche de stockage 8 est en communication fluidique avec le récipient souple 2 par l'intermédiaire d'une deuxième tubulure 9 connectée à une extrémité au deuxième orifice d'accès 5 du récipient 2 et à l'autre extrémité à une orifice d'accès 10 de la poche de stockage 8.

Le système à poches 1 comprend en outre une poche d'échantillonnage 11 en communication fluidique avec la poche de stockage 8 par l'intermédiaire d'une troisième tubulure 12 reliée à l'une de ses extrémités à un deuxième orifice d'accès 13 de la poche de stockage 8 et à son autre extrémité, à un orifice d'accès 14 de la poche d'échantillonnage 11.

Une quatrième tubulure 15 est connectée à l'une de ses extrémités à la troisième tubulure 12 par l'intermédiaire d'un connecteur trois voies 16. L'autre extrémité de cette quatrième tubulure 16 est pourvue de deux évents 17a,17b comprenant chacun une membrane filtrante laissant passer l'air et formant une barrière stérile.

Chacune des tubulures 6,9,12,15 est pourvue d'une pince 18a,18b,18c,18d qui permet le contrôle sélectif d'ouverture et fermeture de l'écoulement des liquides dans chacune de ces tubulures.

Le récipient souple 2 est réalisé notamment dans un matériau plastique laissant passer la lumière ultraviolette, tel que l'éthylène-acétate de vinyle ou l'éthylène propylène fluoré. La poche de stockage 8 est notamment réalisée dans un matériau suffisamment perméable aux gaz pour permettre le stockage pendant au moins 3 à 7 jours d'un concentré de plaquettes. Par exemple, la poche de stockage 8 est réalisée en poly-chlorure de vinyle plastifié avec le tri(2-éthylhéxyl) trimellilate (TOTM) ou le butyryl trihéxyl citrate (BTHC).

La [Fig.2] représente une vue schématique plus détaillée des premier et deuxième orifices 3,5 d'accès du récipient 2. Le premier orifice d'accès 3 est notamment disposé sur un côté du bord supérieur du récipient 2. Le premier orifice d'accès 3 se présente sous la forme d'un canal agencé dans un joint de soudure du récipient 2 et débouchant dans le volume intérieur 4 du récipient 2. Le canal possède une portion élargie 20 dans laquelle débouche l'extrémité 21 de la première tubulure 6. Notamment, l'extrémité 21 de la tubulure 6 débouche au milieu de la portion élargie 20 du canal.

Sur la [Fig.2], le canal formant le premier orifice d'accès 3 est fermé par un joint d'étanchéité 22. Ce joint d'étanchéité est réalisé par soudure et isole le premier orifice d'accès 3 du récipient 2 du volume intérieur 4 du récipient 2.

Le deuxième orifice d'accès 5 se présente sous la forme d'un canal agencé dans un joint de soudure du récipient 2 et débouchant dans le volume intérieur 4 du récipient 2. Une extrémité de la deuxième tubulure 9 s'étend à l'intérieur du canal formant le deuxième orifice d'accès 5 jusqu'à environ la moitié de la longueur du canal. Un bouchon amovible 23 disposé dans ledit canal formant deuxième accès 5 ferme ledit deuxième accès. Après avoir fait glisser le bouchon 23 hors du canal dans le volume intérieur 4 du récipient 2, le deuxième orifice d'accès est ouvert. L'ouverture du deuxième orifice d'accès 5 permet le transfert du liquide du récipient 2 vers la poche de stockage 8 par l'intermédiaire de la deuxième tubulure 9.

Le système à poches 1 est appliqué notamment pour la réduction des pathogènes d'un composant sanguin tel qu'un concentré plaquettaire selon le procédé suivant, en lien avec la [Fig.1].

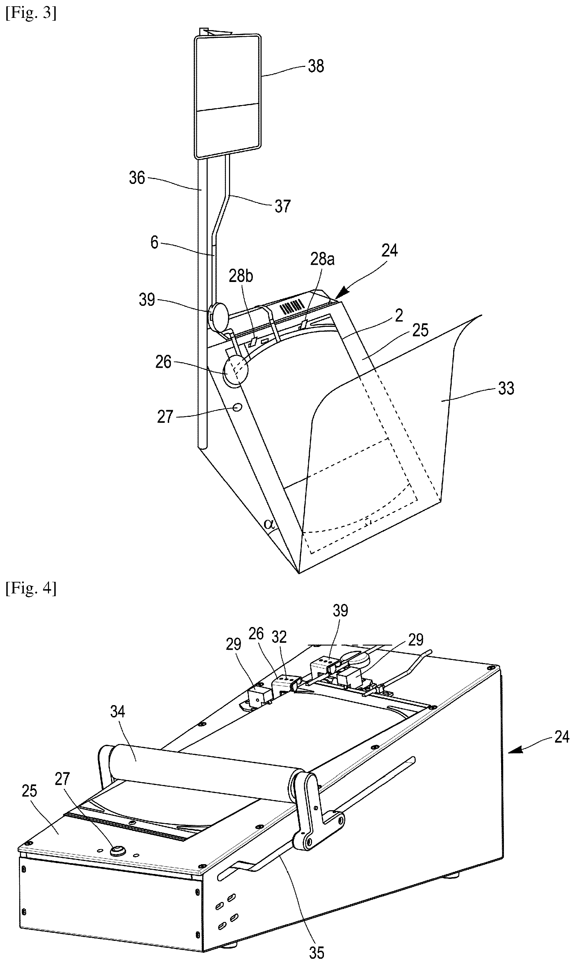

Une portion de tubulure 37 connectée à une poche source 38 contenant un concentré plaquettaire (représentées la [Fig.3]) est connectée de façon stérile à la première tubulure 6. Le concentré plaquettaire de la poche source 38 est transféré dans le volume intérieur 4 du récipient 2 par l'intermédiaire du premier orifice d'accès 3.

Après le transfert, l'air contenu dans le volume intérieur 4 du récipient 2 est chassé du récipient 2 par le premier orifice d'accès 3 en exerçant une pression sur le récipient 2. Une fois l'air chassé, le premier orifice d'accès 3 est fermé par un joint d'étanchéité 22 obtenu par soudure.

La première tubulure 6 est soudée et coupée afin de séparer la poche source 38 contenant initialement le concentré plaquettaire du système à poches 1.

Le récipient 2 est irradié sous agitation avec une lumière ultraviolette afin d'inactiver les éventuels pathogènes présents dans le concentré plaquettaire.

Le bouchon 23 fermant le deuxième orifice d'accès 5 est retiré puis le concentré plaquettaire irradié est transféré dans la poche de stockage 8 pour être stocké jusqu'à 5 à 7 jours.

Après le transfert, la deuxième tubulure 9 est soudée et coupée à l'aide d'une soudeuse à main afin de séparer le récipient 2 du reste du système à poches 1.

Dans une réalisation, un échantillon du concentré plaquettaire est envoyé dans la poche d'échantillonnage 11 pour analyse. Elle est séparée de la poche de stockage 8 en soudant et coupant la troisième tubulure 12, à l'aide d'une soudeuse à main.

On décrit maintenant un appareil pour souder une portion d'un récipient souple, du type notamment du récipient souple 2 du système à poches 1 décrit ci-dessus.

En relation avec la [Fig.3], l'appareil 24 comprend :
- un plateau 25 pour recevoir ledit récipient 2 à souder,
- un dispositif de soudure 26 agencé sur ledit plateau 25 et conçu pour passer de l'un à l'autre des états suivants : un état d'ouverture selon lequel la portion à souder du récipient 2 est placée dans ledit dispositif de soudure sans être pincée, un état de pincement selon lequel la portion à souder du récipient 2 est pincée, et un état de soudure qui suit l'état de pincement selon lequel la portion à souder du récipient 2 est soudée.

Selon l'invention, l'appareil 24 comprend en outre un dispositif d'actionnement 27 conçu pour au moins actionner le dispositif de soudure 26 de l'état de pincement à la position d'ouverture et de l'état de pincement à la position de soudure. Ainsi, le dispositif de soudure 26 est capable de passer directement de l'état de pincement à l'état d'ouverture sans passer par l'état de soudure. La portion à souder du récipient peut ainsi pincée à plusieurs reprises sans être soudée, ce qui autorise par exemple l'utilisateur à procéder à plusieurs essais de purge d'air du récipient avant de souder définitivement ladite portion de récipient, comme expliqué plus bas.

Le dispositif d'actionnement est en outre conçu pour actionner le dispositif de soudure de l'état d'ouverture à l'état de pincement.

Selon la [Fig.3] et dans une réalisation particulière, le plateau 25 est incliné vers le haut par rapport à un plan horizontal, notamment d'un angle α compris entre 10 et 40° par rapport au plan horizontal. Le haut du plateau 25 est ainsi à une hauteur plus élevée que le bas du plateau.

Les termes « haut » et « bas » en relation avec l'appareil ou le plateau sont définis par rapport à la position du récipient 2 lorsqu'il est placé sur le plateau, le bord supérieur du récipient correspondant au haut du plateau et le bord inférieur du récipient correspondant au bas du plateau.

Ce plateau incliné facilite le retrait de l'air du récipient souple par un opérateur lorsque le récipient 2 est placé sur le plateau incliné avec le bord supérieur du récipient 2 contenant le premier orifice d'accès 3 positionné sur le haut du plateau incliné. Ainsi, l'air contenu dans le récipient 2 se trouve au-dessus du liquide contenu dans le récipient et est chassé par le premier orifice d'accès 3 en exerçant une pression sur le récipient au niveau du liquide, de sorte à faire monter progressivement le liquide jusqu'à l'orifice d'accès 3 du récipient 2 tout en poussant l'air à l'extérieur du récipient 2.

En variante non représentée, seule une partie du plateau, notamment la partie haute du plateau 25 recevant la partie supérieure du récipient à souder est inclinée.

Dans la réalisation illustrée sur la [Fig.4], lorsque le récipient 2 comprend le premier orifice d'accès 3 sur un côté du bord supérieur du récipient 2, le récipient est avantageusement placé de biais sur le plateau incliné de sorte à ce que le premier orifice accès 3 du récipient soit le point le plus haut du récipient. Ainsi, lors de l'expulsion de l'air, l'air est dirigé vers ce premier orifice d'accès 3 en réduisant le risque de piéger l'air sur un autre côté du bord supérieur du récipient 2.

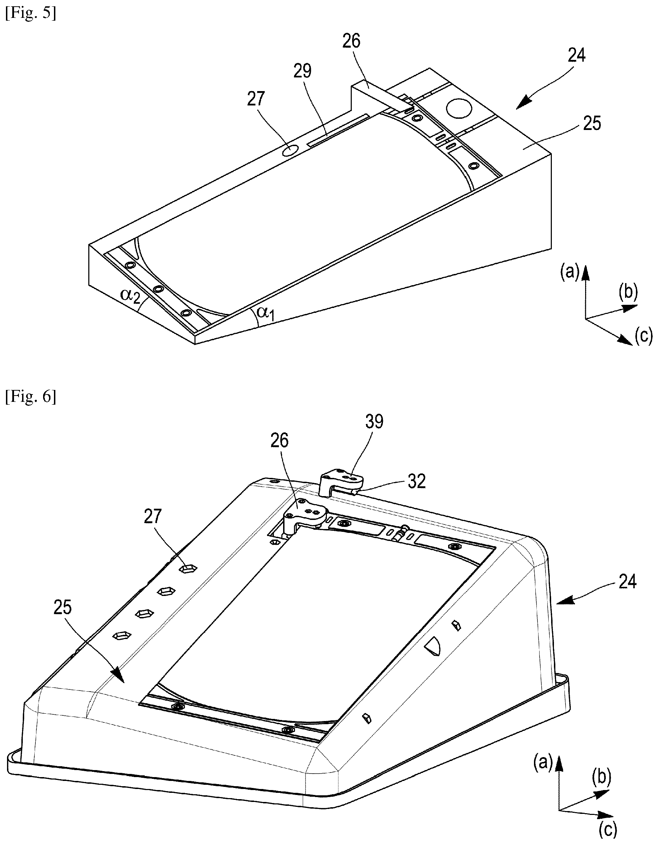

En alternative et selon une autre réalisation illustrée sur les figures 5 et 6, le plateau 25 est incliné vers le haut d'un premier angle α1 par rapport à un axe transversal longitudinal (b) perpendiculaire à un axe vertical (a) et d'un deuxième angle α2 par rapport à un axe transversal latéral (c) perpendiculaire au premier axe vertical (a).

Le premier angle α1 et le deuxième angle α2 sont égaux ou non. En particulier, l'un des angles α1,α2 est compris entre 10° et 40° et l'autre angle α2,α1 est compris entre 15° et 30°.

Dans le cas où le premier orifice d'accès 3 est sur un côté du bord supérieur du récipient 2, cette double inclinaison du plateau 25 permet de placer le récipient 2 droit sur le plateau, c'est-à-dire avec les bords du récipient substantiellement parallèles aux bords du plateau 25. Le premier orifice d'accès 3 représente le point le plus haut du récipient 2.

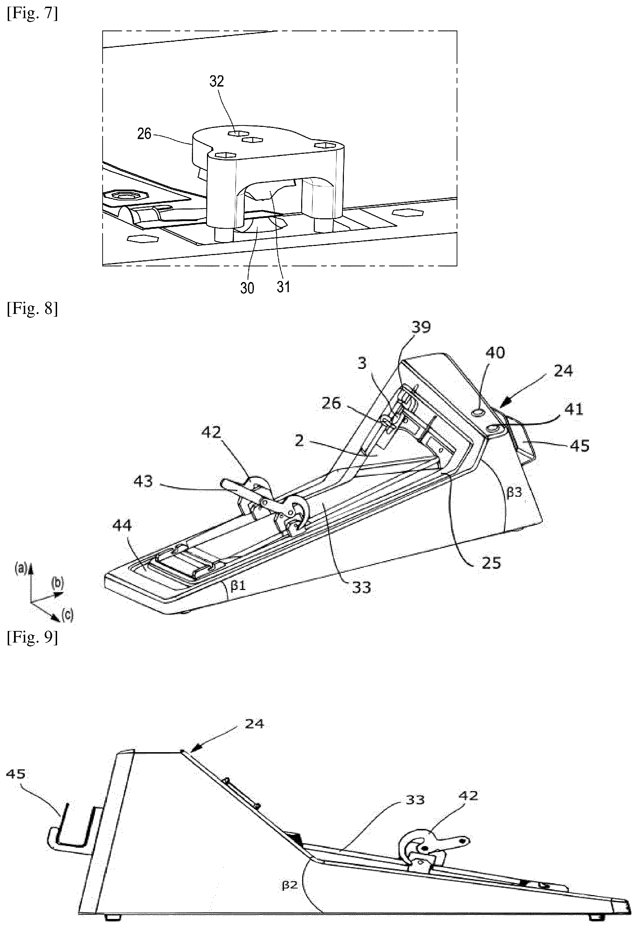

Selon la variante montrée sur les figures 8 et 9, le plateau 25 est incliné de sorte à surélever le premier orifice d'accès 3 par rapport au reste du récipient 2. Le plateau comprend une partie basse inclinée vers le haut d'un premier angle β1 par rapport à un axe transversal longitudinal (b) perpendiculaire à un axe vertical (a). La partie haute du plateau 25 est inclinée de sorte à ce que, par rapport à l'axe transversal longitudinal (b), l'un des bords longitudinaux du plateau forme un deuxième angle β2 et l'autre bord longitudinal forme un troisième angle β3.

Notamment, le deuxième angle β2 est supérieur au premier angle β1. Le troisième angle β3 est supérieur au premier angle β1. Le troisième angle β3 est supérieur au deuxième angle β2.

En particulier, le bord longitudinal formant l'angle β2 est le bord le plus proche de l'orifice d'accès 3 du récipient 2.

Par exemple, le premier angle β1 est compris entre 5° et 30°, le deuxième angle est compris entre 30° et 80°, le troisième angle est compris 35° et 85°.

Selon un autre exemple, le premier angle β1 est d'environ 10°, le deuxième angle β1 est d'environ 50° et le troisième angle β3 est d'environ 55°.

Comme montré sur les figues 8 et 9, le changement d'angles d'inclinaisons du plateau 25 entre sa partie basse et sa partie haute se fait à un niveau plus haut pour l'angle β3 que pour l'angle β2.

Cette triple inclinaison autorise non seulement de placer le récipient 2 aligné aux bords du plateau 25, mais aussi de redresser considérablement la partie haute du récipient comprenant le premier orifice d'accès 3 du récipient 2. La purge d'air, notamment lorsque le récipient 2 comprend peu de fluide, est facilitée.

Afin de faciliter la mise en place et le maintien du récipient 2 sur le plateau 25, le plateau 25 comprend un dispositif de placement conçu pour placer la portion à souder du récipient 2 au niveau du dispositif de soudure 26.

Selon la [Fig.3], le dispositif de placement du plateau est réalisé sous la forme d'au moins une tige 28a,28b destinée à recevoir une ouverture tel qu'un œillet 19a,19b ou une fente du récipient à souder.

En alternative ou en complément représentée sur les figures 4 et 5, le dispositif de placement est réalisé sous la forme d'une ou plusieurs butées 29 agencées sur le plateau 25.

Ce dispositif de placement permet de s'assurer que la portion à souder du récipient 2 est correctement positionnée dans le dispositif de soudure 26, afin de souder le récipient à l'endroit prédéterminé, notamment au niveau du premier orifice d'accès 3 du récipient 2.

Sur les figures 3 à 6 et 8, le dispositif de soudure 26 est agencé à proximité de la partie haute du plateau incliné 25, pour faire face à la portion à souder du récipient 2, au niveau du premier orifice d'accès 3.

En relation avec la [Fig.7], le dispositif de soudure 26 comprend au moins un élément d'appui 30 et un élément de pincement 31 conçus pour se déplacer l'un vers l'autre. Avantageusement, l'élément d'appui 30 est fixe et l'élément de pincement 31 est mobile vers l'élément d'appui 30. En variante, les deux éléments d'appui 30 et de pincement 31 sont mobiles l'un vers l'autre.

Sur la [Fig.7], les éléments d'appui 30 et de pincement 31 sont sous la forme chacun d'une barre profilée.

Lorsque le dispositif de soudure 26 est dans l'état d'ouverture, le récipient à souder est libre entre les éléments d'appui 30 et de pincement 31, c'est-à-dire qu'il n'est pas pincé. La distance entre les éléments d'appui 30 et de pincement 31 est supérieure ou égale à l'épaisseur du récipient 2 au niveau de la portion à souder.

Dans l'état de pincement et dans l'état de soudure, le récipient souple 2 est pincé entre l'élément d'appui 30 et l'élément de pincement 31, c'est-à-dire que la communication entre le premier orifice d'accès 3 du récipient 2 et le volume intérieur 4 du récipient 2 est fermée. La distance entre l'élément d'appui 30 et l'élément de pincement 31 est inférieure à l'épaisseur du récipient 2 au niveau de la portion à souder.

Avantageusement, la distance entre l'élément d'appui 30 et l'élément de pincement 31 dans l'état de soudure est inférieure ou égale à la distance entre l'élément d'appui 30 et l'élément de pincement 31 dans l'état de pincement. Autrement dit, au moment de la soudure, une force supérieure est appliquée sur la portion du récipient à souder par rapport à la force appliquée au moment du pincement. Cette force supérieure améliore la qualité de la soudure.

Afin de réaliser la soudure, l'élément d'appui 30 et l'élément de pincement 31 comprennent un premier un élément conducteur et un deuxième élément conducteur, respectivement.

Lesdits éléments sont notamment des éléments conducteurs électriques pour réaliser une soudure par haute fréquence.

En variante, la soudure est une soudure par chaleur et les éléments conducteurs sont des éléments conducteurs thermiques.

En autre variante, la soudure est une soudure par ultrasons ou infrarouge. Le type de soudure dépend du matériau à souder.

En particulier, le dispositif de soudure 26 comprend en outre un indicateur 32 de l'état dans lequel se trouve le dispositif lumineux. Par exemple, l'indicateur est un indicateur lumineux comprenant une ou plusieurs diodes électroluminescentes. Chaque état du dispositif de soudure 26 est indiqué par l'allumage d'une diode d'une couleur déterminée.

L'appareil pour souder comprend en outre une source d'énergie (non représentée) conçue pour fournir l'énergie aux éléments d'appui 30 et de pincement 31 du dispositif de soudure 26, nécessaire pour réaliser la soudure. Lorsque le dispositif d'actionnement 27 est activé pour passer de l'état de pincement à l'état de soudure, la source d'énergie est également activée.

Par exemple, la source d'énergie est une batterie ou un accumulateur.

Le dispositif d'actionnement 27 est conçu pour actionner le dispositif de soudure 26 au moins de l'état de pincement à l'état d'ouverture et de l'état de pincement à l'état de soudure. Avantageusement, le dispositif d'actionnement 27 est en outre conçu pour actionner le dispositif de soudure de l'état d'ouverture à l'état de pincement.

Par exemple, le dispositif d'actionnement 27 est réalisé sous la forme d'au moins un bouton, un levier ou un commutateur par l'intermédiaire duquel le dispositif de soudure peut être actionné.

Le dispositif d'actionnement est un dispositif manuel. Il est activé par l'opérateur, par exemple par pression et/ou rotation d'un bouton. En variante, il est actionné par une commande au pied.

Selon une réalisation particulière illustrée sur la [Fig.8], le dispositif d'actionnement comprend un ensemble de deux boutons distincts 40,41 : le premier bouton 40 permet d'actionner le dispositif de soudure afin de le faire passer de l'état d'ouverture à l'état de pincement et réciproquement. Le deuxième bouton 41 permet d'actionner le dispositif de soudure de l'état de pincement à l'état de soudure. Dans ce cas, le deuxième bouton 41 ne peut être activé que lorsque le dispositif de soudure est dans l'état de pincement.

Alternativement, le dispositif d'actionnement comprend un seul bouton permettant par exemple par une pression courte d'actionner le dispositif de soudure de l'état d'ouverture à l'état de pincement et réciproquement, et par une pression longue permet d'actionner le dispositif de soudure vers l'état de soudure.

Avantageusement, le dispositif d'actionnement 27 comprend un ensemble de boutons placés de chaque côté du plateau afin de rendre pratique l'utilisation de l'appareil aussi bien par des droitiers que par des gauchers.

Ce dispositif d'actionnement 27 est particulièrement utile lors de l'extraction de l'air du récipient à souder par le premier orifice d'accès. Cette opération est délicate et nécessite parfois plusieurs tentatives de la part d'un opérateur. Dans les appareils de soudure de type de ceux décrits dans le document WO 2016/079702, une pression sur le bouton de démarrage entraîne le pincement et la soudure, sans possibilité d'interrompre manuellement cet enchaînement. La possibilité d'actionner manuellement un bouton pour supprimer le pincement si de l'air est encore présent dans le récipient ou pour souder le récipient si l'air a été correctement chassé dudit récipient procure un avantage.

Le dispositif de soudure 26 comprend une unité de pilotage sous la forme d'un système électronique et informatique qui comprend par exemple un microprocesseur conçu pour exécuter un programme de commande. L'exécution de ce programme permet notamment de piloter le dispositif de soudure 26, en fonction par exemple de l'activation du dispositif d'actionnement 27.

Par exemple le système électronique et informatique contrôle le temps et/ou l'énergie nécessaire pour réaliser la soudure de la portion de récipient. Lorsque la soudure est réalisée, le dispositif de soudure 26 passe automatiquement de l'état de soudure à l'état de pincement et/ou à l'état d'ouverture.

Afin de faciliter l'extraction d'air dans le récipient, en plus ou en alternative du plateau incliné, l'appareil comprend en outre un dispositif d'extraction d'air du récipient conçu pour compresser le récipient.

Les figures 3, 4 et 8 montrent deux réalisations particulières d'un tel dispositif d'extraction d'air.

Sur les figures 3 et 8, le dispositif d'extraction d'air est réalisé sous la forme d'une plaque 33 agencée de façon mobile sur le plateau 25. La plaque est avantageusement transparente afin que l'opérateur puisse suivre la montée du liquide dans le récipient 2 et l'expulsion de l'air du récipient 2.

La plaque 33 est notamment mobile selon un mouvement de rotation dont l'axe de rotation est placé sur bas du plateau 25, à proximité de la partie du plateau destinée à recevoir le bord inférieur du récipient 2, c'est-à-dire, le côté opposé au côté comprenant le premier orifice d'accès 3 du récipient 2.

La plaque 33 est mobile entre une position fermée selon laquelle la plaque 33 compresse le récipient 2 placé sur le plateau 25 et une position ouverte selon laquelle la plaque 33 est éloignée du récipient 2 placé sur le plateau 25. En position fermée, la plaque 33 écrase le récipient 2.

Par exemple, la plaque 33 est maintenue sur le plateau à l'aide d'une charnière. Ainsi, lorsque la plaque 33 est déplacée de la position ouverte à la position fermée, le récipient 2 est compressé progressivement du bord inférieur vers le bord supérieur du récipient 2.

Dans la réalisation particulière de la [Fig.8], la longueur de la plaque 33 correspond à la partie basse du plateau incliné 25. La plaque 33 permet de presser la partie basse du récipient 2 afin de chasser l'air et le fluide dans la partie haute du récipient qui s'étend au-delà de la plaque 33.

Avantageusement, le bord supérieur de la plaque 33 est arrondi pour ne pas endommager le récipient 2 lors de l'application de la pression sur le récipient.

Selon une variante montrée sur la [Fig.8], le dispositif d'extraction d'air sous forme de plaque 33 comprend en outre une poignée de maintien 42 conçue pour maintenir une certaine pression sur la plaque 33 appuyant sur le récipient 2. Cette poignée d'appui comprend une barre d'appui 43 qui peut être saisie avec une seule main par l'utilisateur afin de maintenir la plaque 33 plaquée contre le récipient 2. L'autre main de l'utilisateur est alors libre pour manœuvrer le dispositif d'actionnement 27, le cas échéant.

La poignée de maintien 42 est mobile entre une position haute selon laquelle la barre d'appui 43 est éloignée de la plaque 33 et une position basse selon laquelle la barre d'appui 43 est en contact avec la plaque 33. Cette barre d'appui 43 comprend avantageusement un mécanisme de blocage conçu pour bloquer la poignée de maintien dans une position basse.

En particulier, la poignée de maintien 42 est déplaçable de façon linéaire et longitudinalement le long du plateau 25 afin de varier les points de pression sur la plaque 33.

Sur la [Fig.4], le dispositif d'extraction d'air est réalisé sous la forme d'un rouleau 34 agencé de façon mobile sur le plateau 25. Le rouleau est un rouleau compresseur conçu pour compresser le récipient 2.

Le rouleau 34 est placé latéralement au plateau 25 et se déplace de façon linéaire et longitudinalement de sorte à rouler du bord inférieur vers le bord supérieur du récipient 2 en déplaçant le liquide contenu dans le récipient 2 vers le haut.

Dans cette réalisation, l'appareil pour souder 24 comprend des glissières 35 permettant le déplacement linéaire du rouleau compresseur 34.

Selon une réalisation particulière représentée sur la [Fig.3], l'appareil pour souder 24 comprend en outre un support 36 pour accrocher un récipient source 38, notamment sous forme d'une potence munie d'un crochet. Avantageusement, la potence est réglable en hauteur.

La poche source 38 est en communication fluidique par l'intermédiaire d'une portion de tubulure 37 connectée stérilement à la première tubulure 6 avec le récipient à souder 2. La poche source comprend notamment le liquide à traiter. Pour transférer le liquide à traiter de la poche source 38 vers le récipient 2 à souder, on accroche la poche source 38 au support 36, de sorte à placer la poche source 38 plus haut que le récipient 2. Le liquide est transféré par gravité dans le récipient 2 à souder.

En alternative non représentée, le transfert est réalisé à l'aide d'une pompe, par exemple une pompe péristaltique placée sur la première tubulure 6.

Selon les figures 3, 4, 6 et 8, l'appareil pour souder 24 comprend un autre dispositif de soudure 39 conçu pour souder la première tubulure 6 reliée au récipient 2 à souder. Cet autre dispositif de soudure 39 est agencé sur le haut de l'appareil 24. Il est utilisé pour souder et couper la première tubulure 6 après la soudure de la portion à souder du récipient 2, de sorte à séparer le récipient 2 de la poche source 38. Avantageusement, cet autre dispositif de soudure 39 est contrôlé par l'unité de pilotage de sorte qu'il soude et coupe la première tubulure 6 en même temps ou juste après que le premier dispositif de soudure 26 ait soudé la portion à souder du récipient 2.

En variante, l'autre dispositif de soudure 39 est actionné par l'intermédiaire d'un actionneur manuel, tel qu'un bouton.

Selon une autre réalisation, l'appareil 24 pour souder comprend un détecteur d'interface air/liquide, notamment agencé à proximité du premier orifice d'accès 3 ou sur la première tubulure 6. Ce détecteur est utile au moment de l'extraction d'air du récipient à souder 2 pour signaler à l'opérateur que le liquide qui sort du récipient n'est plus de l'air mais du liquide, de sorte qu'il convient d'activer le dispositif d'actionnement 27 afin de pincer la portion à souder.

Dans un exemple particulier, le détecteur envoie un signal à l'unité de pilotage qui actionne automatiquement le passage du dispositif de soudure 27 de l'état d'ouverture à l'état de pincement.

Selon une autre réalisation, l'appareil pour souder 24 comprend en outre un dispositif anti-débordement afin d'éviter que du liquide s'échappant du récipient 2 se répande dans l'appareil. Ce dispositif anti-débordement prend par exemple la forme d'un réservoir 44 dans lequel est agencé la plateau 25.

Avantageusement, le plateau 25 est amovible afin de pouvoir nettoyer facilement l'appareil à souder 24.

Comme montré sur la [Fig.8], l'appareil pour souder 24 peut comprendre un dispositif de support 45 de poches, avantageusement amovible, afin par exemple de ranger les poches du système à poches, autres que celle placée sur le plateau 25. Dans le support 45 de poches de la [Fig.8], les poches sont rangées pliées.

L'appareil à souder 24 tel que décrit ci-dessus et le récipient à souder 2 comprenant un premier orifice d'accès 3 en communication fluidique avec le volume intérieur 4 du récipient 2 forment un ensemble, dans lequel le dispositif de soudure 26 de l'appareil pour souder 24 est agencé au niveau de la portion à souder du récipient 2.

On décrit maintenant un procédé pour souder une portion déterminée d'un récipient 2 comprenant un premier orifice d'accès 3 en communication fluidique avec un volume intérieur 4 du récipient 2 à l'aide de l'appareil 24 décrit ci-dessus. Le procédé comprend les étapes :
a) placer le récipient 2 sur le plateau 25, de sorte à disposer la portion du récipient à souder au niveau du dispositif de soudure 26 de l'appareil, ledit dispositif de soudure 26 étant dans sa position d'ouverture,
b) exercer un pression sur ledit récipient 2 ainsi placé sur le plateau 25 de sorte à évacuer l'air contenu dans le récipient 2 par ledit premier orifice d'accès 3 du récipient 2,
c) activer le dispositif d'actionnement 27 pour faire passer le dispositif de soudure de l'état d'ouverture à l'état de pincement, de sorte à isoler le premier orifice d'accès 3 et le volume intérieur 4 dudit récipient 2 dont l'air a été chassé, et
d) activer le dispositif d'actionnement 27 pour faire passer le dispositif de soudure 26 de l'état de pincement à l'état de soudure, de sorte à former un joint d'étanchéité 22 entre ledit premier orifice d'accès 3 et le volume intérieur 4 du récipient 2.

Ce procédé permet de réaliser aisément la purge de l'air du récipient 2 et sa soudure avec un appareil unique, produisant ainsi un gain de temps dans la manipulation du récipient.

En particulier, le placement du récipient 2 sur le plateau 25 est réalisé à l'aide d'un dispositif de placement tel que décrit ci-dessus. Par exemple, l'une ou moins des ouvertures 19a-e du récipient 2 est insérée dans des tiges 28a,28b agencées sur le plateau 25.

En variante, le récipient 2 est placé sur le plateau 25 en le disposant entre des butées 29 agencées sur le plateau 25.

L'étape d'extraction d'air du récipient 2 est réalisée manuellement par l'opérateur, en exerçant une pression sur le récipient ou en roulant le récipient 2 sur lui-même pour évacuer l'air par le premier orifice d'accès 3 du récipient. Cette opération délicate est facilitée lorsque le plateau 25 est incliné, doublement incliné ou triplement incliné.

Cette étape d'extraction d'air est avantageusement réalisée à l'aide d'un dispositif d'extraction d'air tel qu'une plaque 33 ou un rouleau compresseur 34.

L'activation du dispositif d'actionnement 27 est réalisée d'une seule main, permettant à l'opérateur d'utiliser son autre main pour l'évacuation de l'air.

Si l'air n'a pas été correctement évacué du récipient ou si l'opérateur désire réitérer cette étape d'évacuation d'air, l'appareil est ainsi conçu pour que l'opérateur puisse faire passer autant de fois que nécessaire le dispositif de soudure 26 de l'état de pincement à l'état d'ouverture sans passer par l'état de soudure. Si l'opérateur est satisfait de cette étape d'évacuation d'air, il fait alors passer le dispositif de soudure 26 de l'état de pincement à l'état de soudure.

Ainsi, le procédé comprend avantageusement les étapes supplémentaires suivantes :
c1) entre les étapes c) et d), activer le dispositif d'actionnement 27 pour faire passer le dispositif de soudure de l'état de pincement à l'état d'ouverture de sorte à ouvrir à nouveau la communication fluidique entre le premier orifice d'accès 3 et le volume intérieur 4 du récipient 2,
c2) exercer un pression sur ledit récipient 2 de sorte à évacuer l'air contenu dans le récipient par le premier orifice d'accès 3 du récipient 2,
c3) renouveler les étapes c1 et c2 autant de fois que nécessaire avant de passer à l'étape d).

## Revendications

1. Appareil (24) pour souder une portion d'un récipient souple (2), ledit appareil (24) comprenant :
- un plateau (25) pour recevoir ledit récipient à souder (2),
- un dispositif de soudure (26) agencé sur ledit plateau (25) et conçu pour passer de l'un à l'autre des états suivants : un état d'ouverture selon lequel la portion à souder du récipient (2) est placée dans ledit dispositif de soudure (26) sans être pincée, un état de pincement selon lequel la portion à souder du récipient (2) est pincée, et un état de soudure qui suit l'état de pincement selon lequel la portion à souder du récipient (2) est soudée, **caractérisé en ce qu'**il comprend en outre un dispositif d'actionnement (27) conçu pour actionner le dispositif de soudure (26) au moins de l'état de pincement à l'état d'ouverture sans passer par l'état de soudure et de l'état de pincement à l'état de soudure.

2. Appareil selon la revendication 1, **caractérisé en ce que** le plateau (25) est incliné vers le haut par rapport à un plan horizontal, notamment d'un angle α compris entre 10° et 40° par rapport à l'horizontal.

3. Appareil selon la revendication 2, **caractérisé en ce que** le plateau (25) est incliné vers le haut d'un premier angle α1 par rapport à un axe transversal longitudinal (b) perpendiculaire à un axe vertical (a) et d'un deuxième angle α2 par rapport à un axe transversal latéral (c) perpendiculaire au premier axe transversal (a), notamment l'un des angles α1,α2 étant compris entre 10° et 40° et l'autre angle α2,α1 étant compris entre 15° et 30°.

4. Appareil selon l'une quelconque des revendications 1 à 3, **caractérisé en ce que** le plateau (25) comprend un dispositif de placement conçu pour placer la portion à souder du récipient (2) au niveau du dispositif de soudure (26).

5. Appareil selon la revendication 4, **caractérisé en ce que** le dispositif de placement est réalisé sous la forme d'au moins une tige (28a,28b) destinée à recevoir une ouverture (19a,19b) du récipient à souder (2) et/ ou sous la forme d'une ou plusieurs butées (29) agencées sur le plateau (25).

6. Appareil selon l'une quelconque des revendications 2 à 5, **caractérisé en ce que** le dispositif de soudure (26) est agencé à proximité de la partie haute du plateau (25) incliné.

7. Appareil selon l'une quelconque des revendications 1 à 6, **caractérisé en ce que** le dispositif de soudure (26) comprend au moins un élément d'appui (30) et un élément de pincement (31) conçus pour se déplacer l'un vers l'autre.

8. Appareil selon la revendication 7, **caractérisé en ce que** l'élément d'appui (30) et l'élément de pincement (31) comprennent un premier un élément conducteur et un deuxième élément conducteur, respectivement, notamment lesdits éléments d'appui (30) et de pincement (31) sont notamment des éléments conducteurs électriques pour réaliser une soudure par haute fréquence.

9. Appareil selon l'une quelconque des revendications 1 à 8, **caractérisé en ce que** le dispositif d'actionnement (37) est réalisé sous la forme d'au moins un bouton, un levier ou un commutateur par l'intermédiaire duquel le dispositif de soudure (26) peut être actionné.

10. Appareil selon l'une quelconque des revendications 1 à 9, **caractérisé en ce qu'**il comprend en outre un dispositif d'extraction d'air du récipient, réalisé notamment sous la forme d'une plaque (33) agencée de façon mobile sur le plateau (25) ou sous la forme d'un rouleau (34) agencé de façon mobile sur le plateau (25).

11. Appareil selon l'une quelconque des revendications 1 à 10, **caractérisé en ce qu'**il comprend en outre un support (36) pour accrocher un récipient source (38), le support (36) étant notamment sous forme d'une potence munie d'un crochet.

12. Appareil selon l'une quelconque des revendications 1 à 11, **caractérisé en ce qu'**il comprend un autre dispositif de soudure (39) conçu pour souder une première tubulure (6) reliée au récipient à souder (2).

13. Appareil selon l'une quelconque des revendications 1 à 12, **caractérisé en ce qu'**il comprend en outre un détecteur d'interface air/liquide.

14. Procédé pour souder une portion d'un récipient (2) comprenant un premier orifice d'accès (3) en communication fluidique avec un volume intérieur (4) dudit récipient (2) à l'aide de l'appareil (24) selon l'une des revendications 1 à 13, ledit procédé comprenant les étapes consistant à :
a) placer le récipient (2) sur le plateau (25), de sorte à disposer la portion du récipient à souder au niveau du dispositif de soudure (26) de l'appareil (24), ledit dispositif de soudure (26) étant dans sa position d'ouverture,
b) exercer un pression sur ledit récipient (2) ainsi placé sur le plateau (25) de sorte à évacuer l'air contenu dans le récipient (2) par ledit premier orifice d'accès (3) du récipient (2),
c) activer le dispositif d'actionnement (27) pour faire passer le dispositif de soudure (26) de l'état d'ouverture à l'état de pincement, de sorte à isoler le premier orifice d'accès (3) et le volume intérieur (4) dudit récipient (2) dont l'air a été chassé, et
d) activer le dispositif d'actionnement (27) pour faire passer le dispositif de soudure (26) de l'état de pincement à l'état de soudure, de sorte à former un joint d'étanchéité (22) entre ledit premier orifice d'accès (3) et le volume intérieur (4) du récipient (2).

15. Procédé selon la revendication 14, **caractérisé en ce qu'**il comprend en outre les étapes consistant à :
c1) entre les étapes c) et d), activer le dispositif d'actionnement (27) pour faire passer le dispositif de soudure (26) de l'état de pincement à l'état d'ouverture de sorte à ouvrir à nouveau la communication fluidique entre le premier orifice d'accès (3) et le volume intérieur (4) du récipient (2).
c2) exercer un pression sur ledit récipient (2) de sorte à évacuer l'air contenu dans le récipient (2) par le premier orifice d'accès (3) du récipient (2),
c3) renouveler les étapes c1 et c2 autant de fois que nécessaire avant de passer à l'étape d).

## Patentansprüche

1. Vorrichtung (24) zum Verschweißen eines Abschnitts eines flexiblen Behälters (2), die Vorrichtung (24) umfassend:
- eine Fläche (25) zum Aufnehmen des zu verschweißenden Behälters (2),
- ein Schweißgerät (26), das auf der Fläche (25) angeordnet und dazu ausgelegt ist, von einem der folgenden Zustände in den anderen zu wechseln: ein Öffnungszustand, in dem der zu verschweißende Abschnitt des Behälters (2) in das Schweißgerät (26) gelegt wird, ohne eingeklemmt zu werden, ein Klemmzustand, in dem der zu verschweißende Abschnitt des Behälters (2) eingeklemmt wird, und ein Schweißzustand, der auf den Klemmzustand folgt, in dem der zu verschweißende Abschnitt des Behälters (2) verschweißt wird, **dadurch gekennzeichnet, dass** sie ferner ein Betätigungsgerät (27) umfasst, das dazu ausgelegt ist, das Schweißgerät (26) zumindest von dem Klemmzustand in den Öffnungszustand, ohne den Schweißzustand zu durchlaufen, und von dem Klemmzustand in den Schweißzustand zu betätigen.

2. Vorrichtung nach Anspruch 1, **dadurch gekennzeichnet, dass** die Fläche (25) in Bezug auf eine horizontale Ebene nach oben geneigt ist, insbesondere um einen Winkel α zwischen 10° und 40° in Bezug auf die Horizontale.

3. Vorrichtung nach Anspruch 2, **dadurch gekennzeichnet, dass** die Fläche (25) um einen ersten Winkel α1 in Bezug auf eine Längsquerachse (b) senkrecht zu einer vertikalen Achse (a) und um einen zweiten Winkel α2 in Bezug auf eine seitliche Querachse (c) senkrecht zu der ersten Querachse (a) nach oben geneigt ist, wobei insbesondere einer der Winkel α1, α2 zwischen 10° und 40° liegt und der andere Winkel α2, α1 zwischen 15° und 30° liegt.

4. Vorrichtung nach einem der Ansprüche 1 bis 3, **dadurch gekennzeichnet, dass** die Fläche (25) eine Platzierungsgerät umfasst, die dazu ausgelegt ist, den zu verschweißenden Abschnitt des Behälters (2) an der Schweißgerät (26) zu platzieren.

5. Vorrichtung nach Anspruch 4, **dadurch gekennzeichnet, dass** die Platzierungsgerät in Form von mindestens einer Stange (28a, 28b) zum Aufnehmen einer Öffnung (19a, 19b) des zu verschweißenden Behälters (2) und/oder in Form von einem oder mehreren auf der Fläche (25) angeordneten Anschlägen (29) ausgeführt ist.

6. Vorrichtung nach einem der Ansprüche 2 bis 5, **dadurch gekennzeichnet, dass** das Schweißgerät (26) in der Nähe des oberen Teils der geneigten Fläche (25) angeordnet ist.

7. Vorrichtung nach einem der Ansprüche 1 bis 6, **dadurch gekennzeichnet, dass** das Schweißgerät (26) mindestens ein Stützelement (30) und ein Klemmelement (31) umfasst, die dazu ausgelegt sind, sich aufeinander zu zu bewegen.

8. Vorrichtung nach Anspruch 7, **dadurch gekennzeichnet, dass** das Stützelement (30) und das Klemmelement (31) jeweils ein erstes leitendes Element und ein zweites leitendes Element umfassen, insbesondere die Stütz- (30) und Klemmelemente (31) insbesondere elektrisch leitende Elemente sind, um eine Hochfrequenzverschweißung auszuführen.

9. Vorrichtung nach einem der Ansprüche 1 bis 8, **dadurch gekennzeichnet, dass** das Betätigungsgerät (37) mindestens in Form eines Knopfs, eines Hebels oder eines Schalters ausgeführt ist, über den das Schweißgerät (26) betätigt werden kann.

10. Vorrichtung nach einem der Ansprüche 1 bis 9, **dadurch gekennzeichnet, dass** sie ferner ein Absauggerät von Luft aus dem Behälter umfasst, das insbesondere in Form einer Platte (33), die bewegbar auf der Fläche (25) angeordnet ist, oder in Form einer Rolle (34), die bewegbar auf der Fläche (25) angeordnet ist, ausgeführt ist.

11. Vorrichtung nach einem der Ansprüche 1 bis 10, **dadurch gekennzeichnet, dass** sie ferner eine Halterung (36) zum Einhängen eines Quellbehälters (38) umfasst, wobei die Halterung (36) insbesondere in Form eines Ständers ist, der mit einem Haken versehen ist.

12. Vorrichtung nach einem der Ansprüche 1 bis 11, **dadurch gekennzeichnet, dass** sie ein weiteres Schweißgerät (39) umfasst, das zum Schweißen eines ersten Schlauchs (6) ausgelegt ist, der mit dem zu verschweißenden Behälter (2) verbunden ist.

13. Vorrichtung nach einem der Ansprüche 1 bis 12, **dadurch gekennzeichnet, dass** sie ferner einen Detektor der Luft/Flüssigkeit-Grenzfläche umfasst.

14. Verfahren zum Verschweißen eines Abschnitts eines Behälters (2), umfassend ein erstes Zugangsloch (3) in Fluidverbindung mit einem inneren Volumen (4) des Behälters (2), mittels der Vorrichtung (24) nach einem der Ansprüche 1 bis 13, das Verfahren umfassend die folgenden Schritte:
a) Platzieren des Behälters (2) auf der Fläche (25), um den verschweißenden Abschnitt des Behälters an dem Schweißgerät (26) der Vorrichtung (24) anzulegen, wobei das Schweißgerät (26) in seiner Öffnungsposition ist,
b) Ausüben von Druck auf den Behälter (2), der so auf der Fläche (25) platziert ist, um die in dem Behälter (2) enthaltene Luft durch das erste Zugangsloch (3) des Behälters (2) zu evakuieren,
c) Aktivieren des Betätigungsgeräts (27), um das Schweißgerät (26) aus dem Öffnungszustand in den Klemmzustand zu bringen, um das erste Zugangsloch (3) und das innere Volumen (4) des Behälters (2), aus dem die Luft verdrängt wurde, zu isolieren, und
d) Aktivieren des Betätigungsgeräts (27), um das Schweißgerät (26) aus dem Klemmzustand in den Schweißzustand zu bringen, um eine Dichtung (22) zwischen den ersten Zugangsloch (3) und dem inneren Volumen (4) des Behälters (2) zu bilden.

15. Verfahren nach Anspruch 14, **dadurch gekennzeichnet, dass** es ferner die folgenden Schritte umfasst:
c1) zwischen Schritt c) und d), Aktivieren des Betätigungsgeräts (27), um das Schweißgerät (26) aus dem Klemmzustand in den Öffnungszustand zu bringen, um die Fluidverbindung zwischen dem ersten Zugangsloch (3) und dem inneren Volumen (4) des Behälters (2) wieder zu öffnen.
c2) Ausüben eines Drucks auf den Behälter (2), um die in dem Behälter (2) enthaltene Luft durch das erste Zugangsloch (3) des Behälters (2) zu evakuieren,
c3) Wiederholen von Schritt c1 und c2 so oft wie nötig, bevor zu Schritt d) übergegangen wird.

## Claims

1. Apparatus (24) for welding a portion of a flexible container (2), said apparatus (24) comprising:
• a tray (25) for receiving said container to be welded (2),
• a welding device (26) arranged on said tray (25) and configured to switch from one of the following states to the other: an open state wherein the portion of the container (2) to be welded is placed in said welding device (26) without being clamped, a clamping state wherein the portion of the container (2) to be welded is clamped, and a welding state which comes after the clamping state wherein the portion of the container (2) to be welded is welded,
**characterised in that** it further comprises an actuating device (27) configured to actuate the welding device (26) at least from the clamping state to the open state without passing through the welding state and from the clamping state to the welding state.

2. Apparatus according to claim 1, **characterised in that** the tray (25) is inclined upwards with respect to a horizontal plane, in particular by an angle α of between 10° and 40° with respect to the horizontal.

3. Apparatus according to claim 2, **characterised in that** the tray (25) is inclined upwards by a first angle α1 with respect to a longitudinal transverse axis (b) perpendicular to a vertical axis (a) and by a second angle α2 with respect to a lateral transverse axis (c) perpendicular to the first transverse axis (a), in particular one of the angles α1, α2 being between 10° and 40° and the other angle α2, α1 being between 15° and 30°.

4. Apparatus according to any one of claims 1 to 3, **characterised in that** the tray (25) comprises a placement device designed to place the portion of the container (2) to be welded at the welding device (26).

5. Apparatus according to claim 4, **characterised in that** the placement device is constructed in the form of at least one rod (28a, 28b) intended to receive an opening (19a, 19b) of the container (2) to be welded and/or in the form of one or more stops (29) arranged on the tray (25).

6. Apparatus according to any one of claims 2 to 5, **characterised in that** the welding device (26) is arranged in the vicinity of the upper part of the inclined tray (25).

7. Apparatus according to any one of claims 1 to 6, **characterised in that** the welding device (26) comprises at least one bearing element (30) and one clamping element (31) designed to move towards each other.

8. Apparatus according to claim 7, **characterized in that** the bearing element (30) and the clamping element (31) comprise a first conductive element and a second conductive element, respectively, said bearing (30) and clamping (31) elements being in particular electrically conductive elements for performing high-frequency welding.

9. Apparatus according to any one of claims 1 to 8, **characterised in that** the actuating device (27) is in the form of at least one button, lever or switch by means of which the welding device (26) can be actuated.

10. Apparatus according to any one of claims 1 to 9, **characterised in that** it further comprises a device for extracting air from the container (2), constructed in particular in the form of a plate (33) movably arranged on the tray (25) or in the form of a roller (34) movably arranged on the tray (25).

11. Apparatus according to any one of claims 1 to 10, **characterised in that** it further comprises a support (36) for hanging a source container (38), the support (36) being in particular in the form of a bracket provided with a hook.

12. Apparatus according to any one of claims 1 to 11, **characterised in that** it comprises another welding device (39) designed to weld a first tube (6) connected to the container (2) to be welded.

13. Apparatus according to any one of claims 1 to 12, **characterised in that** it further comprises an air/liquid interface detector.

14. Method for welding a portion of a container (2) comprising a first access port (3) in fluid communication with an interior volume (4) of said container (2) by using the apparatus (24) according to one of claims 1 to 13, said method comprising the steps of:
a) placing the container (2) on the tray (25), so as to dispose the portion of the container (2) to be welded at the welding device (26) of the apparatus (24), said welding device (26) being in its open position,
b) exerting pressure on said container (2) thus placed on the plate (25), so as to evacuate the air contained in the container (2) through said first access port (3) of the container (2),
c) activating the actuating device (27) to move the welding device (26) from the open state to the clamping state, so as to isolate the first access port (3) and the interior volume (4) of said container (2) from which the air has been expelled, and
d) activating the actuating device (27) to move the welding device (26) from the clamping state to the welding state, so as to form a sealing joint (22) between said first access port (3) and the interior volume (4) of the container (2).

15. Method according to claim 14, **characterised in that** it further comprises the steps of:
c1) between steps c) and d), activating the actuating device (27) to move the welding device (26) from the clamping state to the open state so as to re-open the fluid communication between the first access port (3) and the interior volume (4) of the container (2),
c2) exerting pressure on said container (2) so as to evacuate the air contained in the container (2) through the first access port (3) of the container (2),
c3) repeating steps c1 and c2 as many times as necessary before moving on to step d).
